# EUROPEAN PATENT APPLICATION

(11) **EP 3 326 991 A1**
(43) Date of publication of application: **30.05.2018**
(21) Application number: 16200947.6
(22) Date of filing: 28.11.2016
(51) Int. Cl.: C04B 41/89, F01D 5/28

(54) **IMPROVED COATING METHOD OF CMC PARTS IN A PLASMA SPRAY DEVICE**

(71) Applicant: Siemens Aktiengesellschaft, 80333 München (DE)
(72) Inventor: Flores Renteria, Arturo, 12161 Berlin (DE); Hollingsworth, Peter Stuart, 10589 Berlin (DE)

(57) **Abstract**

By roughening the surface of a CMC substrate with a plasma spray device using the same plasma gun for roughening and coating by adjusting spraying parameters, good adhering and coating of the ceramic layer on a CMC substrate is yielded or is performed.

## Description

The invention relates to a method of coating a CMC part with a layer, wherein the steps of roughening and coating a ceramic layer is performed by the same device.

Ceramic Matrix Composites (CMCs) offer a high potential as new material for vanes and combustion parts in Large Gas Turbines. Due to the limited hot gas resistance, a thermal barrier coating (TBC) needs to be applied on the CMC surface. The common coating technology is an atmospheric plasma spray process (APS).

A key property of the coating is the adhesion strength (also called bond strength). Low adhesion strength values lead to a spallation of the coating, in particular under thermal cycling (service operation). The bonding between coating and substrate is mainly achieved by mechanical clamping of the impacting spray particles on the substrate.

To achieve an adequate roughness, the surface needs to be mchanically machined, commonly via handed grit blasting of corundum, before coating. The low fracture toughness of the CMCs leads to a non-uniform abrasion of the CMC surface while machining. Furthermore the impacting corundum particles cause a breaking of the ceramic fibers. That results in decreased bond strength.

The common way to ensure high adhesion strength between coating and substrate (for metallic components) is a hand-operated grit blasting process. The grit blasting leads to roughening of the metallic surface. The impacting spray particles are able to clamp with the rough surface of the substrate.

In case of CMC substrates, the grit blasting process shows two main disadvantages:
1. The hand-controlled process results in an undesired non-uniform abrasion of the CMC surface. This leads to different surface conditions (local different roughness).
2. The actual grit blasting process causes a breaking of the ceramic fibers. These broken fibers melt during the coating run. This leads to reduced bond strength.

The aim of the invention is to overcome the problems listed above.

The problem is solved by a method according to claim 1.

This invention gives the opportunity to improve the bond strength of ceramic coatings, on CMCs by means of an advanced roughening process using the conventional powder gun, especially an APS gun.

To solve the problems of the handed grit blasting process, an advanced, robot based plasma spray process of alumina particles is used as new roughening technology of the CMC surface.

For coating of the CMCs, alumina (Al₂O₃) is often used as ceramic bondcoat material. The same alumina powder and plasma process could be used to rough the CMC surface. For this purpose the process parameter of the plasma spray process need to be adjusted. For roughening the CMC surface the impacting particle have to be in solid state. According to this the plasma process parameter need to be shifted to "colder" conditions (decrease of the particle temperature). The solid particle impact on the surface (but do not stick to the surface, due to solid state) and lead to a homogeneous and well controllable roughening process.

The advantages of the robot based plasma spray process are:
1. In particular for complex 3D-geometries especial a vane or blade, the use a robot based process ensures a steady motion of the spray gun (constant relative speed between spray gun and the parts surface). This leads to an uniform coating roughness.
2. The plasma gun equipment (gravimetric powder feeder) enables a high-precision powder feeding process. This leads to a homogeneous and well controllable roughening process.
3. The used agglomerated and sintered alumina powders are of spherical shape (in comparison to the sharp-edged grit blasting powder). Due to this, the blasting process with the spherical powders avoids an excessively breaking of the ceramic fibers.
4. After roughening, the plasma plume can be used for cleaning the CMC surface.
5. Due to the fact, that roughening, cleaning and coating is conducted with the same powder and equipment, all three processes can be performed in one run,
   for this purpose, just the process parameter
   a) Roughening: cold spray with powder;
   b) Cleaning: hot spray without powder;
   c) Coating: hot spray with powder
have to be adopted.

Even a HVOF device can be used.

The combination of roughening, cleaning and coating process of the CMC surface by means of an atmospheric plasma spray process is the inventive step. This enables a homogeneous and soft roughening process and a corresponding faster process chain with an increased the bond strength of the coating on the CMC part.

The CMC substrate is preferably a SiC-SiC, Ox-Ox, mullite or alumina based CMC part,
especially with fibres of SiC, alumina, mullite or alumina/mullite.

A zirconia based coating is preferably applied on the surface of the CMC substrate, especially with a ceramic bond layer, which is preferably alumina in the case of Ox-Ox-CMC's.

This alumina bond coat is preferably applied direct onto the CMC substrate.

## Claims

1. Method
to coat a CMC substrate with a ceramic layer,
wherein the CMC substrate is installed into a powder spray device,
especially in a plasma spray device or in a HVOF device, wherein in a first step the surface of the CMC substrate is roughened,
by using the powder spray gun as a grid blaster, optionally cleaning roughened surface using the gun,
and in the last step applying at least one ceramic layer onto the CMC substrate.

2. Method according to claim 1,
wherein particles of alumina or silicon carbide are used to roughen the surface of the CMC substrate.

3. Method according to claim 1 or 2,
wherein the CMC substrate is an SiC-SiC, Ox-Ox, mullite or alumina based CMC part,
especially with fibres of SiC, alumina, mullite or alumina/mullite.

4. Method according to any of claims 1, 2 or 3
wherein a zirconia based coating is applied on the surface of the CMC substrate,
especially with a ceramic bond layer.

5. Method according to any of claims 1, 2, 3 or 4,
wherein an alumina bond coat is applied direct onto the CMC substrate.

6. Method according to any of the preceding claims,
wherein a plasma spray device or HVOF device is used.
